# EUROPÄISCHE PATENTANMELDUNG

(11) **EP 4 425 094 A1**
(43) Veröffentlichungstag der Anmeldung: **04.09.2024**
(21) Anmeldenummer: 24159956.2
(22) Anmeldetag: 27.02.2024
(51) Int. Cl.: G01B 5/20

(54) **WÄLZPRÜFMASCHINE ZUR WÄLZPRÜFUNG VON VERZAHNUNGEN**

(30) Priorität: 03.03.2023 DE 202023101031 U
(71) Anmelder: Klingelnberg AG, 8050 Zürich (CH)
(72) Erfinder: Landvogt, Alexander, 76287 Rheinstetten (DE); Serafin, Thomas, 76135 Karlsruhe (DE)
(74) Vertreter: Janke Scholl Patentanwälte PartG mbB

(57) **Zusammenfassung**

Wälzprüfmaschine zur Wälzprüfung von Verzahnungen, mit einer ersten Spindel (12) und mit einer zweiten Spindel (14), mit einem ersten Meisterrad (16), das an der ersten Spindel (12) angeordnet ist, wobei ein zweites Meisterrad (18) vorgesehen ist, das an der ersten Spindel (12) angeordnet ist.

## Beschreibung

Die vorliegende Erfindung betrifft Wälzprüfmaschinen zur Wälzprüfung von Verzahnungen. Weiter betrifft die vorliegende Erfindung ein Verfahren zur Wälzprüfung von Verzahnungen und eine Lehrzahnradanordnung.

In der Elektromobilität werden Fahrzeuge mit Hybridantrieb oder rein elektromotorischem Antrieb ausgestattet, wobei eine Antriebsleistung mindestens eines Elektromotors zum Antrieb des betreffenden Fahrzeugs verwendet wird. Um den betreffenden Elektromotor möglichst effizient zu betreiben, werden Zahnradgetriebe zwischen dem Elektromotor und einem Achsdifferenzial einer anzutreibenden Radachse des Fahrzeugs angeordnet.

So ist es beispielsweise bekannt, eine Ausgangsdrehzahl und ein Ausgangsdrehmoment einer Ausgangswelle des Elektromotors mittels einer ersten Stirnradstufe auf eine Zwischenwelle zu übertragen und von der Zwischenwelle mittels einer zweiten Stirnradstufe auf das Achsdifferenzial zu übertragen. Hierbei findet üblicherweise eine Übersetzung ins Langsame statt, da Elektromotoren bei höheren Drehzahlen effizient arbeiten.

Auf der vorgenannten Zwischenwelle sind daher zwei Zahnräder unterschiedlichen Durchmessers angeordnet, z.B. außenschrägverzahnte Stirnräder, um die Leistung des Elektromotors von der Ausgangswelle des Elektromotors auf das Achsdifferenzial des Fahrzeugs zu übertragen.

Nach der Herstellung der Zahnräder der Zwischenwelle müssen diese Zahnräder bezüglich der Einhaltung vorgegebener Qualitätskriterien überprüft werden. Hierzu ist es bekannt, Zahnräder einer Wälzprüfung zu unterziehen. Dabei wird üblicherweise jeweils ein Zahnrad einzeln in eine Wälzprüfmaschine eingespannt und geprüft. Zur Prüfung der Zahnräder der Zwischenwelle ist daher ein Umspannen und Wechseln sowohl des betreffenden zu prüfenden Zahnrads als auch des üblicherweise mit einem zugeordneten Zahnrad abwälzenden Meisterrads bzw. Lehrzahnrads erforderlich.

Der vorliegenden Erfindung liegt die technische Problemstellung zugrunde, eine Wälzprüfmaschine, ein Verfahren zur Wälzprüfung sowie eine Lehrzahnradanordnung anzugeben, die jeweils eine möglichst effiziente Prüfung zweier Zahnräder ermöglicht.

Die voranstehend beschriebene, technische Problemstellung wird jeweils durch die Merkmale der unabhängigen Ansprüche gelöst. Weitere Ausgestaltungen der Erfindung ergeben sich aus der nachstehenden Beschreibung.

Gemäß einem ersten Aspekt betrifft die Erfindung eine Wälzprüfmaschine zur Wälzprüfung von Verzahnungen, mit einer ersten Spindel und mit einer zweiten Spindel, mit einem ersten Meisterrad, das an der ersten Spindel angeordnet ist. Die Wälzprüfmaschine zeichnet sich dadurch aus, dass ein zweites Meisterrad vorgesehen ist, das an der ersten Spindel angeordnet ist.

Durch die Anordnung eines zweiten Meisterrads an der ersten Spindel ist es möglich, zwei zu prüfende Zahnräder aufeinanderfolgend zu prüfen, ohne, dass ein Umspannen oder Wechseln eines Meisterrad oder eines zu prüfenden Zahnrads erforderlich ist. So können z.B. zwei zu prüfende Zahnräder einer eingangs genannten Zwischenwelle gemeinsam in einer Aufspannung vorbereitet und in die Wälzprüfmaschine eingespannt werden, sodass eine zügige und effiziente aufeinanderfolgende Wälzprüfung zweier Zahnräder ermöglicht wird. Die erste Spindel trägt daher gleichzeitig zwei Meisterräder.

Es ist daher insbesondere möglich, zwei zu prüfende Zahnräder in einem Prüfzyklus der Wälzprüfmaschine zu prüfen, wobei die zu prüfenden Zahnräder nacheinander jeweils mit dem zugeordneten ersten Meisterrad bzw. zweiten Meisterrad in Eingriff gebracht werden.

Wenn im vorliegenden Text von einem Meisterrad gesprochen wird bzw. der Begriff "Meisterrad" verwendet wird, so handelt es sich dabei in bekannter Weise um ein hochgenau gefertigtes Zahnrad, das keine bzw. nahezu keine Abweichungen zu einer vorgegebenen Sollgeometrie aufweist. Es handelt sich daher um ein nahezu perfektes Zahnrad, das zur Bestimmung von Abweichungen der zu prüfenden Zahnräder als Referenz herangezogen werden kann.

Das Meisterrad kann auch als Lehrrad bzw. Lehrzahnrad bezeichnet werden, wobei dieser Begriff an den Begriff der "Lehre" bzw. "Prüflehre" im Sinne eines Bezugsnormals aus der Messtechnik angelehnt ist, wie Maßlehren, Formlehren, Grenzlehren oder dergleichen. Die Begriffe "Meisterrad", "Lehrrad" und "Lehrzahnrad" werden im vorliegenden Text synonym verwendet.

Die Begriffe Zahnrad und Verzahnung werden im vorliegenden Text synonym verwendet. Dementsprechend werden die Begriffe "erstes zu prüfendes Zahnrad" und "erste zu prüfende Verzahnung" synonym verwendet. Gleichermaßen werden die Begriffe "zweites zu prüfendes Zahnrad" und "zweite zu prüfende Verzahnung" synonym verwendet.

Die erste Spindel kann eine erste Welle aufweisen, wobei das erste Meisterrad und das zweite Meisterrad auf der ersten Welle angeordnet sind, insbesondere aufgespannt sind.

Die erste Welle kann lösbar und austauschbar an der Wälzprüfmaschine gehalten sein.

Das erste Meisterrad und das zweite Meisterrad können lösbar und austauschbar an der ersten Welle gehalten sein.

Das erste Meisterrad und das zweite Meisterrad können einteilig bzw. einstückig mit der ersten Welle gebildet sein. Dementsprechend sind das erste und das zweite Meisterrad in diesem Fall untrennbar bzw. unlösbar mit der Welle verbunden. Insbesondere können das erste Meisterrad, das zweite Meisterrad und die erste Welle aus dem Vollen, d. h. aus einem Materialblock herausgearbeitet worden sein. Das erste Meisterrad, das zweite Meisterrad und die Welle können daher ein integrales, einteiliges Bauteil sein.

Es kann vorgesehen sein, dass eine relative Phasenlage des ersten Meisterrades zu dem zweiten Meisterrad vorgegeben ist, d. h., dass ein relativer Winkelabstand der Zähne bzw. Lücken des ersten Meisterrades zu den Lücken bzw. Zähnen des zweiten Meisterrades vordefiniert ist. Auf diese Weise kann ein Einmitten vereinfacht werden, da die relative Position der Zähne und Lücken vorbekannt ist. Sofern beispielsweise im Rahmen einer ersten Wälzprüfung zunächst das erste Meisterrad und das erste zu prüfende Zahnrad miteinander in Eingriff gebracht werden, was zunächst ein Einmitten des ersten Meisterrads mit dem ersten zu prüfenden Zahnrad voraussetzt, ist für die darauf folgende weitere Wälzprüfung bereits die Position der Zähne und Lücken bekannt und dass Einmitten bzw. in Eingriff bringen kann schneller erfolgen.

Soweit beispielsweise für eine bestimmte zu prüfende Baureihe von Zahnrädern mehrere erste Meisterräder und zweite Meisterräder vorgesehen sind, die an jeweils zugeordneten ersten Wellen montiert bzw. angeordnet sind, so kann vorgesehen sein, dass für jede dieser Anordnungen der Meisterräder die relative Phasenlage zwischen dem ersten Meisterrad und dem zweiten Meisterrad gleich ist.

Die erste Welle kann einen frei auskragenden Endabschnitt aufweisen, wobei das erste Meisterrad und das zweite Meisterrad im Bereich des frei auskragenden Endabschnitts der ersten Welle angeordnet sind. Wenn vorliegend von einem frei auskragenden Endabschnitt gesprochen wird, so bedeutet dies, dass der betreffende Endabschnitt keine endseitige Lagerung aufweist, sondern nach Art eines Kragarms ohne weitere Abstützung frei auskragend erstreckt ist.

Eine frei auskragende Länge des frei auskragenden Endabschnitts kann 20 cm betragen oder weniger als 20 cm betragen. Die frei auskragende Länge des frei auskragenden Endabschnitts kann insbesondere 10 cm betragen oder weniger als 10 cm betragen.

Der ersten Spindel kann ein erster Antrieb zum Drehantreiben der ersten Spindel zugeordnet sein. Alternativ oder ergänzend kann der zweiten Spindel ein zweiter Antrieb zum Drehantreiben der zweiten Spindel zugeordnet sein.

Die erste Spindel und die zweite Spindel können dazu eingerichtet sein, ein auf der ersten Spindel und der zweiten Spindel aufgenommenes Meisterrad und ein jeweils zugeordnetes zu prüfen des Zahnrad gegeneinander zu verspannen und unter einer vorgegebenen Drehzahl und einem vorgegebenen Drehmoment miteinander abzuwälzen. Es versteht sich, dass auch vorgegebene Drehzahl- und Drehmomentverläufe bzw. -profile gefahren werden können.

Die Wälzprüfmaschine kann zwei oder mehr gesteuerte Achsen aufweisen. Die gesteuerten Achsen sind dazu eingerichtet, in einer ersten Maschineneinstellung das erste Meisterrad mit einem ersten zu prüfenden Zahnrad in Eingriff zu bringen und in einer zweiten Maschineneinstellung das zweite Meisterrad mit einer zweiten zu prüfenden Zahnrad in Eingriff zu bringen. Die gesteuerten Achsen dienen daher dazu, die erste Spindel und die zweite Spindel relativ zueinander zu bewegen, um an den Spindeln gehaltene Meisterräder bzw. zu prüfende Zahnräder miteinander in Eingriff zu bringen und in einem entsprechenden Prüfablauf durch Abwälzen der Zahnräder miteinander zu prüfen.

Die gesteuerten Achsen können numerisch gesteuerte Achsen sein, wobei beispielsweise zwei oder mehr Linearachsen zur translatorischen Relativbewegung der Spindeln zueinander vorgesehen sein können und/oder wobei zwei oder mehr Rotationsachsen zur rotatorischen Relativbewegung der Spindeln relativ zueinander vorgesehen sein können.

Es kann vorgesehen sein, dass die zweite Spindel eine zweite Welle zum Aufnehmen von zwei zu prüfenden Verzahnungen aufweist. Die zweite Welle kann lösbar und austauschbar an der Wälzprüfmaschine gehalten sein. Eine erste zu prüfende Verzahnung und eine zweite zu prüfende Verzahnung können lösbar und austauschbar an der zweiten Welle angeordnet sein.

Es kann daher vorgesehen sein, dass das erste zu prüfende Zahnrad und das zweite zu prüfende Zahnrad auf der zweiten Welle angeordnet sind, insbesondere aufgespannt sind.

Die Wälzprüfmaschine kann zur Durchführung einer Einflanken-Wälzprüfung eingerichtet sein.

Die Wälzprüfmaschine kann zur Durchführung einer Zweiflanken-Wälzprüfung eingerichtet sein.

Die Wälzprüfmaschine kann zur Durchführung einer Körperschallprüfung eingerichtet sein.

Die Wälzprüfmaschine kann zur Durchführung einer Drehbeschleunigungsprüfung eingerichtet sein.

Die Wälzprüfmaschine kann zur Durchführung Helix-Wälzprüfung eingerichtet sein.

Eine gegenständliche Wälzprüfmaschine kann z.B. dazu eingerichtet sein, eine oder mehrere der folgenden Parameter bzw. Verzahnungsabweichungen zu bestimmen, insbesondere mittels Einflanken-Wälzprüfung und/oder Zweiflanken-Wälzprüfung oder einem der vorgenannten Verfahren: Achsabstand, Rundlauf, Wälzsprung, Wälzabweichung, Zweikugelmaß, Rundlauffehler, Zahn-zu-Zahn Amplitude (langwellige und kurzwellige), maximale Wälzabweichung, Transmission Error und dynamic Backlash, Geräuschverhalten, Oberflächenfehler.

Es kann vorgesehen sein, dass die beiden Meisterräder jeweils Schrägverzahnungen sind und dass eines der beiden Meisterräder linkssteigend ist und dass eines der beiden Meisterräder rechtssteigend ist.

Es kann vorgesehen sein, dass die beiden zu prüfenden Zahnräder jeweils Schrägverzahnungen sind und dass eine der beiden zu prüfenden Verzahnungen linkssteigend ist und dass eine der beiden zu prüfenden Verzahnungen rechtssteigend ist.

Es kann vorgesehen sein, dass sowohl die Meisterräder als auch die zu prüfenden Zahnräder jeweils außenschrägverzahnte Stirnräder sind.

Gemäß einem zweiten Aspekt betrifft die Erfindung eine Wälzprüfmaschine, eingerichtet zur Durchführung eines Verfahrens, mit den Verfahrensschritten: Wälzprüfung einer ersten zu prüfenden Verzahnung durch Abwälzen mit einem ersten Meisterrad mittels einer Wälzprüfmaschine; Wälzprüfung einer zweiten zu prüfenden Verzahnung durch Abwälzen mit einem zweiten Meisterrad mittels der Wälzprüfmaschine. Die Wälzprüfmaschine zeichnet sich dadurch aus, dass das erste Meisterrad und das zweite Meisterrad auf einer ersten Spindel der Wälzprüfmaschine angeordnet sind und dass die erste zu prüfende Verzahnung und die zweite zu prüfende Verzahnung auf einer zweiten Spindel der Wälzprüfmaschine angeordnet sind. Insbesondere kann die Wälzprüfmaschine eine Steuereinrichtung aufweisen, die zur Durchführung der vorgenannten Schritte eingerichtet ist, insbesondere mittels einer Software der Steuereinrichtung.

Es kann vorgesehen sein, dass die Wälzprüfmaschine zwei oder mehr gesteuerte Achsen aufweist, wobei die gesteuerten Achsen dazu eingerichtet sind, in einer ersten Maschineneinstellung das erste Meisterrad mit einem ersten zu prüfenden Zahnrad in Eingriff zu bringen und in einer zweiten Maschineneinstellung das zweite Meisterrad mit einem zweiten zu prüfenden Zahnrad in Eingriff zu bringen und die Wälzprüfung der ersten zu prüfenden Verzahnung mittels der ersten Maschineneinstellung erfolgt und die Wälzprüfung der zweiten zu prüfenden Verzahnung mittels der zweiten Maschineneinstellung erfolgt. Insbesondere kann die Steuereinrichtung eine Software zum Anfahren der Maschineneinstellungen aufweisen.

Gemäß einem dritten Aspekt betrifft die Erfindung eine Lehrzahnradanordnung, mit einem ersten Meisterrad, mit einem benachbart zu dem ersten Meisterrad angeordneten zweiten Meisterrad, wobei das erste Meisterrad und das zweite Meisterrad auf einer ersten Welle angeordnet sind.

Es kann vorgesehen sein, dass die beiden Meisterräder jeweils Schrägverzahnungen sind und dass eines der beiden Meisterräder linkssteigend ist und dass eines der beiden Meisterräder rechtssteigend ist. Es kann vorgesehen sein, dass die Meisterräder außenschrägverzahnte Stirnräder sind.

Das erste Meisterrad und das zweite Meisterrad können lösbar und austauschbar an der ersten Welle gehalten sein.

Das erste Meisterrad und das zweite Meisterrad können einteilig bzw. einstückig mit der ersten Welle gebildet sein. Dementsprechend sind das erste und das zweite Meisterrad in diesem Fall untrennbar bzw. unlösbar mit der Welle verbunden. Insbesondere können das erste Meisterrad, das zweite Meisterrad und die erste Welle aus dem Vollen, d. h. aus einem Materialblock herausgearbeitet worden sein. Das erste Meisterrad, das zweite Meisterrad und die Welle können daher ein integrales, einteiliges Bauteil sein.

Gemäß einem vierten Aspekt betrifft die Erfindung ein Verfahren, mit den Verfahrensschritten: Wälzprüfung einer ersten zu prüfenden Verzahnung durch Abwälzen mit einem ersten Meisterrad mittels einer Wälzprüfmaschine; Wälzprüfung einer zweiten zu prüfenden Verzahnung durch Abwälzen mit einem zweiten Meisterrad mittels der Wälzprüfmaschine. Das Verfahren zeichnet sich dadurch aus, dass das erste Meisterrad und das zweite Meisterrad auf einer ersten Spindel der Wälzprüfmaschine angeordnet sind und dass die erste zu prüfende Verzahnung und die zweite zu prüfende Verzahnung auf einer zweiten Spindel der Wälzprüfmaschine angeordnet sind.

Durch die Anordnung des ersten Meisterrads und des zweite Meisterrads an der ersten Spindel, können das erste zu prüfende Zahnrad und das zweite zu prüfende Zahnrad aufeinanderfolgend ohne ein Umspannen geprüft werden. Somit sind das erste Meisterrad und das zweite Meisterrad gleichzeitig an der ersten Spindel angeordnet. Weiter sind das erste zu prüfende Zahnrad und das zweite zu prüfende Zahnrad gleichzeitig an der zweiten Spindel angeordnet.

Während beispielsweise das erste zu prüfende Zahnrad und das erste Meisterrad miteinander im Eingriff sind, sind zu diesem Zeitpunkt der Prüfung des ersten zu prüfenden Zahnrads sowohl das zweite Meisterrad an der ersten Spindel als auch das zweite zu prüfende Zahnrad der zweiten Spindel angeordnet. Zum anschließenden Prüfen des zweiten zu prüfenden Zahnrad muss dieses daher lediglich mit dem zweiten Meisterrad in Eingriff gebracht werden, um mit der Prüfung beginnen zu können.

Die Wälzprüfmaschine kann zwei oder mehr gesteuerte Achsen aufweisen, wobei die gesteuerten Achsen dazu eingerichtet sind, in einer ersten Maschineneinstellung das erste Meisterrad mit einem ersten zu prüfenden Zahnrad in Eingriff zu bringen und in einer zweiten Maschineneinstellung das zweite Meisterrad mit einer zweiten zu prüfenden Verzahnung in Eingriff zu bringen, wobei die Wälzprüfung der ersten zu prüfenden Verzahnung mittels der ersten Maschineneinstellung erfolgt und die Wälzprüfung der zweiten zu prüfenden Verzahnung mittels der zweiten Maschineneinstellung erfolgt.

Nachfolgend wird die Erfindung anhand einer Ausführungsbeispiele darstellenden Zeichnung näher beschrieben. Es zeigen:
- Fig. 1: eine Wälzprüfmaschine;
- Fig. 2: eine schematische, stark vereinfachte Darstellung der Wälzprüfmaschine aus Fig. 1 in einer ersten Position entsprechend einer ersten Maschineneinstellung;
- Fig. 3: eine schematische, stark vereinfachte Darstellung der Wälzprüfmaschine aus Fig. 1 in einer zweiten Position entsprechend einer zweiten Maschineneinstellung;
- Fig. 4: einen Ablaufplan eines erfindungsgemäßen Verfahrens.

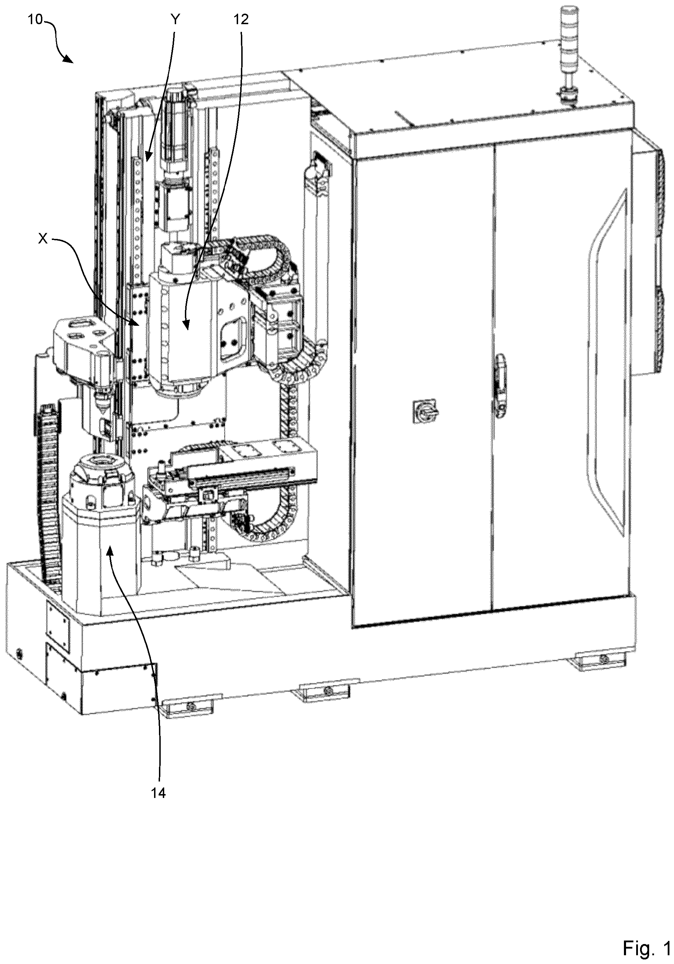

Fig. 1 zeigt eine Wälzprüfmaschine 10 zur Wälzprüfung von Verzahnungen. Es handelt sich hierbei um eine Wälzprüfmaschine der Firma Klingelnberg, die unter dem Namen "Höfler R300" vertrieben wird. Die Wälzprüfmaschine 10 vom Typ "Höfler R300" wird vorliegend nicht mit allen ihren Funktionalitäten beschrieben. Die Beschreibung der Wälzprüfmaschine 10 wird auf diejenigen Aspekte beschränkt, die zur Beschreibung der Erfindung relevant sind.

Die Wälzprüfmaschine 10 hat eine erste Spindel 12 und eine zweite Spindel 14. Die erste Spindel 12 dient dazu, ein Meisterrad aufzunehmen. Die zweite Spindel 14 dient dazu, eine zu prüfende Verzahnung bzw. ein zu prüfendes Zahnrad aufzunehmen.

In Fig. 1 ist die Wälzprüfmaschine 10 ohne ein Meisterrad und ohne eine zu prüfende Verzahnung dargestellt.

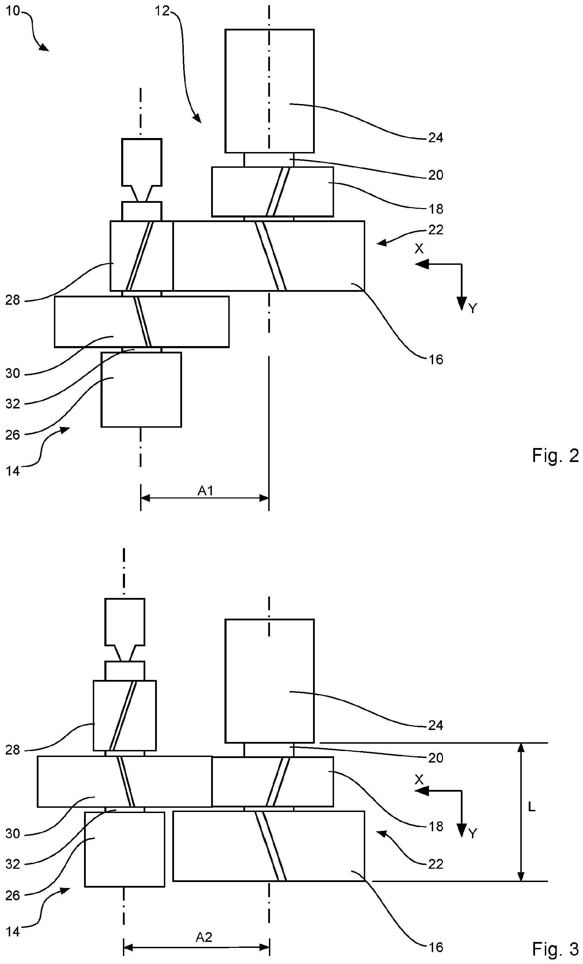

Fig. 2 zeigt die Wälzprüfmaschine 10 in einer stark vereinfachten, schematischen Darstellung.

Die erste Spindel 12 trägt ein erstes Meisterrad 16 und ein zweites Meisterrad 18. An der ersten Spindel 12 sind daher gleichzeitig sowohl das erste Meisterrad 16 als auch das zweite Meisterrad 18 angeordnet.

Die erste Spindel 12 weist eine erste Welle 20 auf. Das erste Meisterrad 16 und das zweite Meisterrad 18 sind auf der ersten Welle 20 aufgespannt. Das erste Meisterrad 16 und das zweite Meisterrad 18 sind daher lösbar mit der ersten Welle 20 verbunden und können von der ersten Welle 20 demontiert werden.

Die erste Welle 20 weist einen frei auskragenden Endabschnitt 22 auf, wobei das erste Meisterrad 16 und das zweite Meisterrad 18 im Bereich des frei auskragenden Endabschnitts 22 der ersten Welle 20 angeordnet sind.

Eine frei auskragende Länge L des frei auskragenden Endabschnitts 22 beträgt vorliegend 10 cm.

Der ersten Spindel 12 ist ein erster Antrieb 24 zum Drehantreiben der ersten Spindel 12 zugeordnet.

Der zweiten Spindel 14 ist ein zweiter Antrieb 26 zum Drehantreiben der zweiten Spindel zugeordnet.

Die Wälzprüfmaschine 10 weist gesteuerte Achsen X, Y auf, die dazu eingerichtet sind, in einer ersten Maschineneinstellung das erste Meisterrad 16 mit einem ersten zu prüfenden Zahnrad 28 in Eingriff zu bringen (Fig. 2) und in einer zweiten Maschineneinstellung das zweite Meisterrad 18 mit einem zweiten zu prüfenden Zahnrad 30 in Eingriff zu bringen (Fig. 3).

Die vorliegend lediglich als Koordinatensystem dargestellten Achsen X, Y repräsentieren beispielhaft Freiheitsgrade der Bewegung, die die Spindeln 12, 14 relativ zueinander aufgrund der gesteuerten Achsen aufweisen. Die Bezugszeichen X, Y repräsentieren daher einerseits Koordinatenrichtungen und andererseits numerisch gesteuerte Achsen zum Verschieben der Spindeln 12, 14 relativ zueinander. Die entsprechenden Linearführungen bzw. Linearachsen sind in Fig. 1 detaillierter zu erkennen.

Die zweite Spindel 14 hat eine zweite Welle 32 auf der das erste zu prüfende Zahnrad 28 und das zweite zu prüfende Zahnrad 30 angeordnet sind, vorliegend aufgespannt sind. Das erste zu prüfende Zahnrad 28 und das zweite zu prüfende Zahnrad 30 sind daher lösbar und austauschbar auf der zweiten Welle 32 angeordnet.

Die Wälzprüfmaschine 10 ist zur Durchführung einer Einflanken-Wälzprüfung und/oder einer Zweiflanken-Wälzprüfung eingerichtet.

Für die ersten Maschineneinstellungen weisen die erste Spindel 12 und die zweite Spindel 14 einen Achsabstand A1 von 145 mm auf. Für die zweiten Maschineneinstellungen weisen die erste Spindel 12 und die zweite Spindel 14 einen Achsabstand A2 von 160 mm auf.

Es versteht sich, dass alle genannten Zahlenwerte lediglich beispielhaft anzusehen sind und von den jeweiligen zu prüfenden Zahnrädern abhängen.

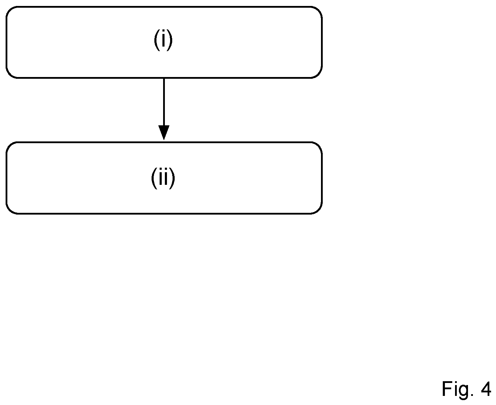

Fig. 4 zeigt einen Ablaufplan eines erfindungsgemäßen Verfahrens, der vorliegend gleichermaßen einen Prüfzyklus innerhalb der erfindungsgemäßen Wälzprüfmaschine 10 repräsentiert.

In einem ersten Verfahrensschritt (i) erfolgt eine Wälzprüfung der ersten zu prüfenden Verzahnung 28 durch Abwälzen mit dem ersten Meisterrad 16 mittels der Wälzprüfmaschine 10.

In einem zweiten Verfahrensschritt (ii) erfolgt eine Wälzprüfung der zweiten zu prüfenden Verzahnung 30 durch Abwälzen mit dem zweiten Meisterrad 18 mittels der Wälzprüfmaschine 10.

Das erste Meisterrad 16 und das zweite Meisterrad 18 sind daher gleichzeitig an der ersten Spindel 12 der Wälzprüfmaschine 10 gehalten und ebenso sind die erste zu prüfende Verzahnung 28 und die zweite zu prüfende Verzahnung 30 gleichzeitig an der zweiten Spindel 14 der Wälzprüfmaschine 10 gehalten. Auf diese Weise ist eine aufeinanderfolgende Prüfung der ersten zu prüfenden Verzahnung 28 und der zweiten zu prüfenden Verzahnung 30 möglich, ohne, dass ein Umrüsten oder Umspannen erfolgen muss.

Die erste zu prüfende Verzahnung 28 und die zweite zu prüfende Verzahnung 30 können aufeinanderfolgend in einem einzelnen Prüfzyklus der Wälzprüfmaschine 10 geprüft werden, in dem zunächst zum Beispiel die in Fig. 2 gezeigte erste Maschineneinstellung mittels der gesteuerten Achsen X, Y eingestellt wird, um das erste Meisterrad 16 und die erste zu prüfende Verzahnung 28 miteinander in Eingriff zu bringen.

Mittels der Antriebe 24, 26 können dann vorgesehene Drehzahlen und Drehmomente eingestellt werden, um die erste zu prüfende Verzahnung 28 im Rahmen einer Wälzprüfung im mit dem ersten Meisterrad 16 abwälzenden Zahnkontakt zu prüfen.

Anschließend kann mittels der gesteuerten Achsen X, Y die in Fig. 3 gezeigte zweite Maschineneinstellung verwendet werden, um die zweite zu prüfende Verzahnung 30 mit dem zweiten Meisterrad 18 in Eingriff zu bringen und ebenfalls eine Wälzprüfung durchzuführen.

Es versteht sich, dass die Reihenfolge der Prüfung auch umgekehrt durchgeführt werden kann, wobei zuerst das zweite zu prüfende Zahnrad 30 geprüft wird und anschließend das erste zu prüfende Zahnrad 28 geprüft wird. Entscheidend ist lediglich, dass die erste Spindel 12 gleichzeitig zwei Meisterräder 16, 18 trägt und dass die zweite Spindel 14 gleichzeitig zwei zu prüfende Verzahnungen 28, 30 trägt.

Die Meisterräder 16, 18 weisen einen unterschiedlichen Durchmesser auf. So weist das erste Meisterrad 16 einen größeren Durchmesser auf als das zweite Meisterrad 18.

Die zu prüfenden Verzahnungen 28, 30 weisen einen unterschiedlichen Durchmesser auf. So weist die erste zu prüfende Verzahnung 28 einen kleineren Durchmesser auf als die zweite zu prüfende Verzahnung 30.

Nachdem die Prüfung der ersten zu prüfenden Verzahnung 28 und der zweiten zu prüfenden Verzahnung 30 abgeschlossen ist, können die erste zu prüfende Verzahnung 28 und die zweite zu prüfende Verzahnung 30 samt der zweiten Welle 32 aus der Wälzprüfmaschine 10 entnommen werden und es kann eine vorbereitete, weitere zweite Welle mit entsprechend aufgenommenen ersten und zweiten weiteren zu prüfenden Verzahnungen in die Wälzprüfmaschine 10 eingesetzt werden, um diese weiteren zu prüfenden ersten und zweiten Verzahnungen mittels der Wälzprüfmaschine 10 und den Meisterrädern 16, 18 zu prüfen. Insbesondere kann das Bestücken der Wälzprüfmaschine 10 mit zu prüfenden Verzahnungen automatisiert erfolgen.

Die beiden Meisterräder 16, 18 sind jeweils Schrägverzahnungen, wobei eines der beiden Meisterräder 16, 18 linkssteigend ist und eines der beiden Meisterräder 16, 18 rechtssteigend ist.

Die beiden zu prüfenden Zahnräder sind 28, 30 sind jeweils Schrägverzahnungen, wobei eine der beiden zu prüfenden Verzahnungen 28, 30 linkssteigend ist und eine der beiden zu prüfenden Verzahnungen 28, 30 rechtssteigend ist.

Die Zahnräder 16, 18, 28, 30 sind vorliegend außenschrägverzahnte Stirnräder.

Die Zahnräder 16, 18 sind zur Verwendung in einem elektromotorisch angetriebenen Kraftfahrzeug vorgesehen, wie einem PKW, einem LKW oder dergleichen.

### BEZUGSZEICHEN:

- 10: Wälzprüfmaschine 10
- 12: erste Spindel
- 14: zweite Spindel
- 16: erstes Meisterrad
- 18: ein zweites Meisterrad
- 20: erste Welle
- 22: Endabschnitt
- 24: erster Antrieb
- 26: zweiter Antrieb
- 28: erstes Zahnrad / erste Verzahnung
- 30: zweites Zahnrad / zweite Verzahnung
- 32: zweite Welle
- L: Länge
- A1: Achsabstand
- A2: Achsabstand
- X: Richtung / NC-Achse
- Y: Richtung / NC-Achse
- (i): Verfahrensschritt
- (ii): Verfahrensschritt

## Patentansprüche

1. Wälzprüfmaschine zur Wälzprüfung von Verzahnungen,
- mit einer ersten Spindel (12) und
- mit einer zweiten Spindel (14),
- mit einem ersten Meisterrad (16), das an der ersten Spindel (12) angeordnet ist, **dadurch gekennzeichnet, dass**
- ein zweites Meisterrad (18) vorgesehen ist, das an der ersten Spindel (12) angeordnet ist.

2. Wälzprüfmaschine nach Anspruch 1,
**dadurch gekennzeichnet, dass**
die erste Spindel (12) eine erste Welle (20) aufweist, wobei das erste Meisterrad (16) und das zweite Meisterrad (18) auf der ersten Welle (20) angeordnet sind, insbesondere aufgespannt sind.

3. Wälzprüfmaschine nach Anspruch 1 oder nach Anspruch 2,
**dadurch gekennzeichnet, dass**
die erste Welle (20) einen frei auskragenden Endabschnitt (22) aufweist, wobei das erste Meisterrad (16) und das zweite Meisterrad (18) im Bereich des frei auskragenden Endabschnitts (22) der ersten Welle (20) angeordnet sind.

4. Wälzprüfmaschine nach Anspruch 3,
**dadurch gekennzeichnet, dass**
eine frei auskragende Länge (L) des frei auskragenden Endabschnitts (22) 20 cm oder weniger beträgt, insbesondere 10 cm oder weniger beträgt.

5. Wälzprüfmaschine nach einem der voranstehenden Ansprüche,
**dadurch gekennzeichnet, dass**
- der ersten Spindel (12) ein erster Antrieb (24) zum Drehantreiben der ersten Spindel (12) zugeordnet ist und/oder
- der zweiten Spindel (14) ein zweiter Antrieb (26) zum Drehantreiben der zweiten Spindel (14) zugeordnet ist.

6. Wälzprüfmaschine nach einem der voranstehenden Ansprüche,
**dadurch gekennzeichnet, dass**
- die Wälzprüfmaschine (10) zwei oder mehr gesteuerte Achsen (X, Y) aufweist,
- wobei die gesteuerten Achsen (X, Y) dazu eingerichtet sind,
- in einer ersten Maschineneinstellung das erste Meisterrad (16) mit einem ersten zu prüfenden Zahnrad (28) in Eingriff zu bringen und
- in einer zweiten Maschineneinstellung das zweite Meisterrad (18) mit einem zweiten zu prüfenden Zahnrad (30) in Eingriff zu bringen.

7. Wälzprüfmaschine nach einem der voranstehenden Ansprüche,
**dadurch gekennzeichnet, dass**
die zweite Spindel (14) eine zweite Welle (32) zum Aufnehmen von zwei zu prüfenden Zahnrädern (28, 30) aufweist.

8. Wälzprüfmaschine nach Anspruch 6 und Anspruch 7,
**dadurch gekennzeichnet, dass**
das erste zu prüfende Zahnrad (28) und das zweite zu prüfende Zahnrad (30) auf der zweiten Welle (32) angeordnet sind, insbesondere aufgespannt sind.

9. Wälzprüfmaschine nach einem der voranstehenden Ansprüche,
**dadurch gekennzeichnet, dass**
die Wälzprüfmaschine (10) zur Durchführung einer Einflanken-Wälzprüfung und/oder einer Zweiflanken-Wälzprüfung eingerichtet ist.

10. Wälzprüfmaschine, eingerichtet zur Durchführung eines Verfahrens, mit den Verfahrensschritten:
- Wälzprüfung eines ersten zu prüfenden Zahnrads (28) durch Abwälzen mit einem ersten Meisterrad (16) mittels einer Wälzprüfmaschine (10);
- Wälzprüfung eines zweiten zu prüfenden Zahnrads (30) durch Abwälzen mit einem zweiten Meisterrad (18) mittels der Wälzprüfmaschine (10);
**dadurch gekennzeichnet,**
- **dass** das erste Meisterrad (16) und das zweite Meisterrad (18) auf einer ersten Spindel (12) der Wälzprüfmaschine (10) angeordnet sind und
- **dass** das erste zu prüfende Zahnrad (28) und das zweite zu prüfende Zahnrad (30) auf einer zweiten Spindel (14) der Wälzprüfmaschine (10) angeordnet sind.

11. Wälzprüfmaschine nach Anspruch 10,
**dadurch gekennzeichnet, dass**
- die Wälzprüfmaschine (10) zwei oder mehr gesteuerte Achsen (X, Y) aufweist,
- wobei die gesteuerten Achsen (X, Y) dazu eingerichtet sind,
- in einer ersten Maschineneinstellung das erste Meisterrad (16) mit einem ersten zu prüfenden Zahnrad (28) in Eingriff zu bringen und
- in einer zweiten Maschineneinstellung das zweite Meisterrad (18) mit einem zweiten zu prüfenden Zahnrad (30) in Eingriff zu bringen und
- die Wälzprüfung des ersten zu prüfenden Zahnrads (28) mittels der ersten Maschineneinstellung erfolgt und
- die Wälzprüfung des zweiten zu prüfenden Zahnrads (30) mittels der zweiten Maschineneinstellung erfolgt.

12. Lehrzahnradanordnung,
- mit einem ersten Meisterrad (16),
- mit einem benachbart zu dem ersten Meisterrad (16) angeordneten zweiten Meisterrad (18),
- wobei das erste Meisterrad (16) und das zweite Meisterrad (18) auf einer ersten Welle (20) angeordnet sind.

13. Lehrzahnradanordnung,
**dadurch gekennzeichnet, dass**
- dass die beiden Meisterräder (16, 18) jeweils Schrägverzahnungen sind und
- dass eines der beiden Meisterräder (16, 18) linkssteigend ist und
- dass eines der beiden Meisterräder (16, 18) rechtssteigend ist.

14. Verfahren, mit den Verfahrensschritten:
- Wälzprüfung eines ersten zu prüfenden Zahnrads (28) durch Abwälzen mit einem ersten Meisterrad (16) mittels einer Wälzprüfmaschine (10);
- Wälzprüfung eines zweiten zu prüfenden Zahnrads (30) durch Abwälzen mit einem zweiten Meisterrad (18) mittels der Wälzprüfmaschine (10);
**dadurch gekennzeichnet,**
- **dass** das erste Meisterrad (16) und das zweite Meisterrad (18) auf einer ersten Spindel (12) der Wälzprüfmaschine (10) angeordnet sind und
- **dass** das erste zu prüfende Zahnrad (28) und das zweite zu prüfende Zahnrad (30) auf einer zweiten Spindel (14) der Wälzprüfmaschine (10) angeordnet sind.

15. Verfahren nach Anspruch 14,
**dadurch gekennzeichnet, dass**
- die Wälzprüfmaschine (10) zwei oder mehr gesteuerte Achsen (X, Y) aufweist,
- wobei die gesteuerten Achsen (X, Y) dazu eingerichtet sind,
- in einer ersten Maschineneinstellung das erste Meisterrad (16) mit einem ersten zu prüfenden Zahnrad (28) in Eingriff zu bringen und
- in einer zweiten Maschineneinstellung das zweite Meisterrad (18) mit einem zweiten zu prüfenden Zahnrad (30) in Eingriff zu bringen und
- die Wälzprüfung des ersten zu prüfenden Zahnrads (28) mittels der ersten Maschineneinstellung erfolgt und
- die Wälzprüfung des zweiten zu prüfenden Zahnrads (30) mittels der zweiten Maschineneinstellung erfolgt.
